# EUROPÄISCHE PATENTSCHRIFT

(11) **EP 1 889 354 B1**
(45) Veröffentlichungstag und Bekanntmachung des Hinweises auf die Patenterteilung: **22.12.2010**
(21) Anmeldenummer: 06725687.5
(22) Anmeldetag: 10.04.2006
(51) Int. Cl.: H02P 7/00

(54) **ELEKTRONISCHE STEUERUNGSEINHEIT ZUR ANSTEUERUNG EXTERNER HALBBRÜCKEN-LEISTUNGSENDSTUFEN UND ELEKTROMOTORISCHER ANTRIEB MIT ELEKTRONISCHER STEUERUNGSEINHEIT**
ELECTRONIC CONTROL UNIT FOR CONTROLLING EXTERNAL HALF-BRIDGE END POWER STAGES AND ELECTROMOTIVE DRIVE WITH ELECTRONIC CONTROL UNIT
UNITE DE COMMANDE ELECTRONIQUE POUR COMMANDER DES ETAGES DE SORTIE DE PUISSANCE DE DEMI-PONTS EXTERNES ET MOTEUR ELECTRIQUE DOTE D'UNE UNITE DE COMMANDE

(30) Priorität: 10.06.2005 DE 102005026973
(43) Veröffentlichungstag der Anmeldung: 20.02.2008
(73) Patentinhaber: Continental Automotive GmbH, 30165 Hannover (DE)
(72) Erfinder: LOIBL, Josef, 93077 Bad Abbach (DE); MAIER, Thomas, 92431 Neunburg v. Wald (DE)
(86) Internationale Anmeldenummer: PCT/EP2006/061490
(87) Internationale Veröffentlichungsnummer: WO 2006/131415

(56) Entgegenhaltungen:
- DE-A1- 4 340 850
- DE-A1- 4 440 064

## Beschreibung

Die vorliegende Erfindung betrifft eine elektronische Steuerungseinheit zur Ansteuerung mindestens dreier externer Halbbrücken-Leistungsendstufen, die für jede der Halbbrücken-Leistungsendstufen ein Steuerungsmodul aufweist.

Darüber hinaus betrifft die vorliegende Erfindung einen elektromotorischen Antrieb mit einer solchen Steuerungseinheit.

Gattungsgemäße Steuerungseinheiten werden zur Ansteuerung von induktiven Lasten eingesetzt, wie sie beispielsweise durch die Spulen einzelner Phasen eines Elektromotors gegeben sind, über zugeordnete Halbbrücken-Leistungsendstufen.

Insbesondere in der Kraftfahrzeugtechnik werden mit zunehmender Tendenz elektromotorische Antriebe eingesetzt zum bedarfsgerechten, gesteuerten oder geregelten Betrieb von Hilfsaggregaten und Stellfunktionen. Beispiele dafür sind elektromotorisch betriebene Kühlerlüfter, Wasserpumpen, Innenraumgebläse sowie Stellantriebe für Fensterheber, Schiebedächer, Cabrioverdecke, Sitzversteller, Lenkkraftunterstützung, Schaltgetriebe, Differentialgetriebe, Bremsaggregate und vieles mehr. In bestimmten Fällen müssen auch mehrere elektromotorische Antriebe miteinander koordiniert oder synchronisiert betrieben werden, wie dies zum Beispiel bei automatisierten Schaltgetrieben (Kupplung/Gangwechsel), Doppelkupplungsgetrieben (Kupplung/Kupplung) oder auch Doppel-Kühlgebläsen der Fall ist.

Hierbei kommen sowohl konventionelle Kommutatormotoren mit Bürsten als auch zunehmend elektronisch kommutierte, bürstenlose Motoren zu Einsatz. Der bedarfsgerechte, gesteuerte, geregelte, abgesicherte und ggf. koordinierte Betrieb dieser Antriebe erfordert in immer stärker werdendem Maße eine aufwendige Ansteuerung der elektromotorischen Antriebe zum Beispiel mit Verfahren zur Pulsweitenmodulation, zur Optimierung der Leistungsausbeute, zur Leistungsregelung und ggf. zur Synchronisation. Dies erfordert in der Regel eine übergeordnete intelligente Ansteuerung mit einem Mikrocontroller, einem Spannungsregler, den erforderlichen Halbleiterendstufen und einer zugehörigen Treiberelektronik als Steuerungseinheit für die Halbleiterendstufen. Dabei sind Mikrocontroller, Spannungsregler und die Halbleiterendstufen variabel bei den unterschiedlichen Motortypen einsetzbar. Die Treiberelektronik muss jedoch auf den jeweiligen Einsatzfall angepasst werden, da ein Kommutatormotor über zwei zu einer H-Vollbrücke verschlatete Halbleiter-Halbbrücken und ein bürstenloser Motor über drei einzelne Halbleiter-Halbbrücken angesteuert wird.

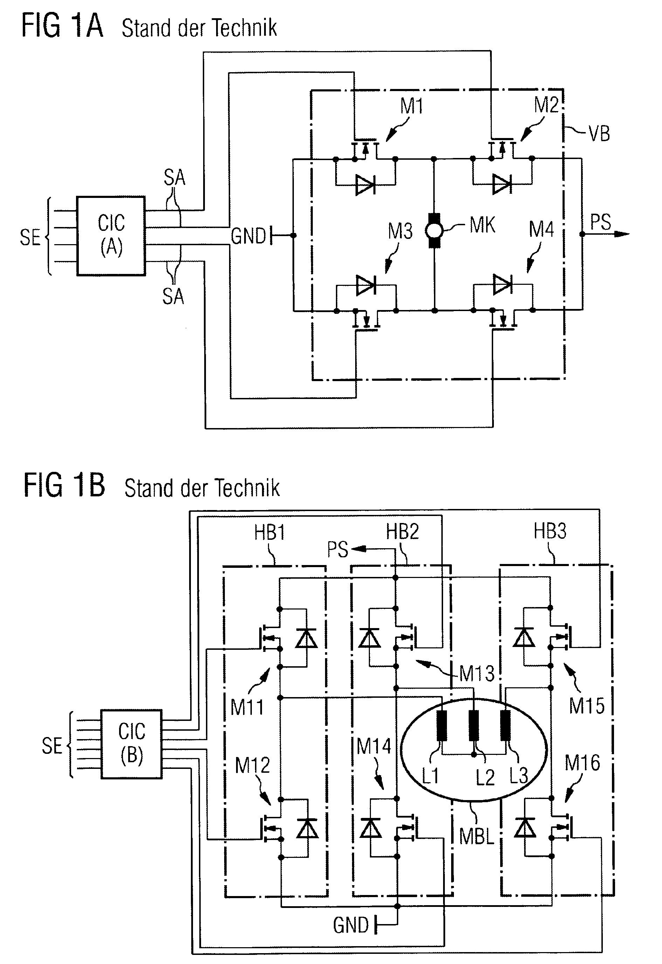

Eine erste Lösung des Problems besteht bisher darin, dass es für jeden Einsatzfall speziell konfigurierte Treiberelektroniken für zwei oder für drei Halbbrücken gibt. Figur 1A und Figur 1B zeigen diesen Stand der Technik. Figur 1A zeigt die H-Vollbrückenanordnung VB eines Kommutatormotors MK mit dem zugehörigen Treiberschaltkreis CIC(A). Figur 1B dagegen zeigt die Anordnung dreier Halbleiter-Halbbrücken HB1, HB2, HB3 zur Ansteuerung eines dreiphasigen bürstenlos kommutierten Elektromotors MBL mit der zugehörigen Treiberschaltkreis CIC(B).

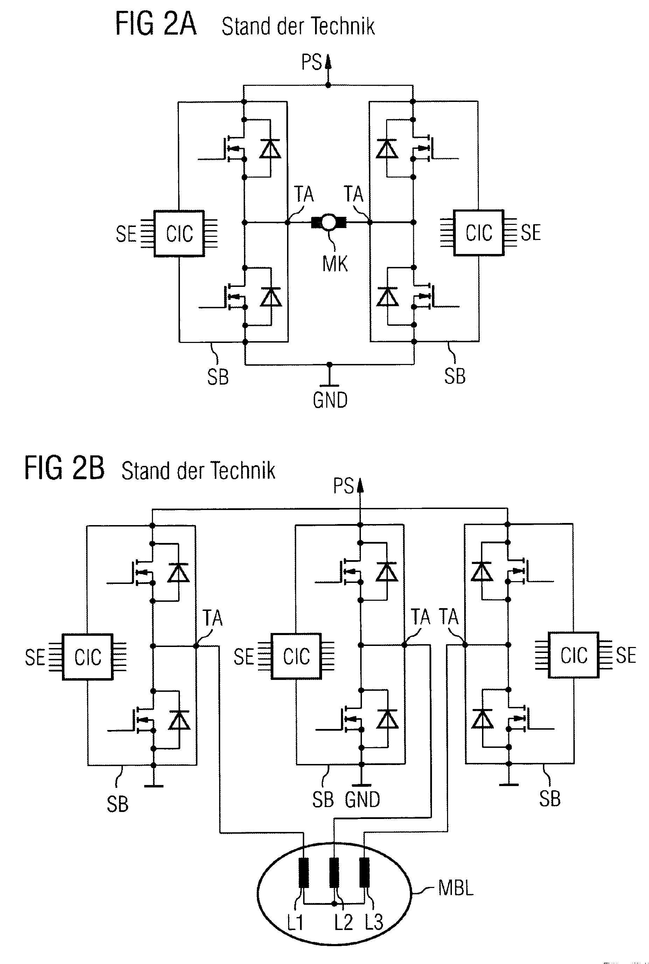

Eine weitere Lösung des Problems besteht darin einzelne, unabhängige Treibermodule für jeweils eine Halbleiter-Halbbrücke zu verwenden. Bestehende Lösungen bieten dabei jeweils eine Halbbrücken-Leistungsendstufe zusammen mit dem zugehörigen Treiberschaltkreis CIC integriert auf einem Steuerungsbaustein SB an. Je nach Bedarf muss dann die benötigte Anzahl von Steuerbausteinen SB kombiniert werden. Dieser Stand der Technik ist in Figur 2A für einen Kommutatormotor MK und in Figur 2B für einen bürstenlosen Motor MBL dargestellt.

Abhängig von der Auswahl einer der bestehenden Lösungen muss ein erhöhter konzeptioneller, konstruktiver, fertigungs- und montagetechnischer Aufwand sowie ggf. ein erhöhter Platzbedarf in Kauf genommen werden, der die einzelne Lösung verteuert.

Die erste Lösung hat zudem den Nachteil, dass sich die Stückzahl der benötigten Treiberschaltkreise auf die zwei Anwendungsfälle A und B aufteilt und somit die Einzelstückzahlen für den jeweilige Treiberschaltkreis kleiner ist. Dies läuft einer rationellen Fertigung zuwider und erhöht letztlich dadurch die Kosten.

Bei der zweiten Lösung besteht der Nachteil, dass für die Leistungsschalteinheiten (MOSFET) keine freie, preisorientierte Auswahl auf dem Markt getroffen werden kann. Vorhandene Einsparungspotentiale können so nicht ausgeschöpft werden.

Der vorliegenden Erfindung liegt daher die Aufgabe zugrunde, eine variabel einsetzbare elektronische Steuerungseinheit (Steuerungseinheit für Halbbrücken-Leistungsendstufen) anzugeben, die gleichermaßen zur Ansteuerung von Kommutatormotoren als auch von bürstenlos kommutierten Motoren einsetzbar ist, gleichwohl jedoch die Nachteile bestehender Lösungen vermeidet. Dadurch sollen letztlich der konzeptionelle Aufwand und gleichzeitig die Gesamtkosten für die elktromotorische Antriebseinheit reduziert werden.

Diese Aufgabe wird durch eine elektronische Steuerungseinheit mit den Merkmalen gemäß Patentanspruch 1 sowie durch einen elektromotorischen Antrieb mit den Merkmalen gemäß Patentanspruch 10 gelöst. Vorteilhafte Aus- und Weiterbildungen, welche einzeln oder in Kombination miteinander eingesetzt werden können, sind Gegenstand der abhängigen Ansprüche.

Die elektronische Steuerungseinheit zur Ansteuerung mindestens dreier externer Halbbrücken-Leistungsendstufen (im Folgenden auch einfach als Halbbrücken oder Halbbrückenschaltungen bezeichnet), weist für jede der Halbbrücken-Leistungsendstufen ein Steuerungsmodul auf. Ein erstes und ein zweites Steuerungsmodul sind zusammen, zur Ansteuerung eines Elektromotors über zwei Halbbrücken-Leistungsendstufen, auf einer ersten gemeinsamen Konfigurationsebene vorkonfiguriert. Mindestens ein drittes Steuerungsmodul ist auf einer zweiten Konfigurationsebene frei konfigurierbar zur wahlweisen Ansteuerung einer einzelnen Phase eines Elektromotors oder zur Nutzung als zwei einfache Signal- oder Treiberausgänge.

Unter Konfiguration ist dabei die elektrische oder programmtechnisch logische Verschaltung bzw. Verknüpfung der Steuerungsmodule CM miteinander, mit den Anschlüssen zum übergeordneten Mikrocontroller, mit den Anschlüssen zu den externen Schaltelementen oder auch mit weiteren Funktionsmodulen der Steuerungseinheit zu verstehen.

Eine feste Vorkonfiguration liegt vor, wenn die Konfiguration zumindest teilweise durch eine unveränderliche oder irreversible, elektrische Verschaltung der Steuerungsmodule während des Produktionsprozesses der Steuerungseinheit, nach Art eines "Anwenderspezifischen integrierten Schaltkreises (ASIC), fest vorgegeben ist.

Freie Konfigurierbarkeit dagegen liegt vor, wenn eine anwendungsspezifische Verschaltung der Steuerungsmodule erst nach Fertigstellung der Steuerungseinheit, je nach Anwendungsfall, ggf. durch den Anwender selbst, verschieden hergestellt werden kann. Dies kann zum Beispiel auf einfache Weise durch externe Aktivierung bestimmter integrierter Funktionsmodule mit Hilfe von so genannten Jumper-Schaltern, durch Überbrückung bestimmter Anschlusspins der Steuerungseinheit oder Anlegen eines Dauersignals erfolgen. Es kann dazu jedoch auch ein in der Steuerungseinheit integriertes einmalig oder wiederholbar programmierbares logisches Gatter (PLA, Programmable Logic Array) vorgesehen sein, welches vom Anwender fei programmiert werden kann.

Die Erfindung betrifft auch einen elektromotorischen Antrieb mit Spulen und Permanentmagneten in einem Motorgehäuse, welcher eine Anordnung von Halbbrücken-Leistungsendstufen zur Spannungsversorgung der Spulen und eine elektronische Steuerungseinheit - wie zuvor beschrieben - aufweist. Letztere dient zur Ansteuerung der Halbbrücken-Leistungsendstufen, wobei die Steuerungseinheit im oder am Motorgehäuse des elektromotorischen Antriebs angeordnet ist.

Die Erfindung lässt sich wie folgt zusammenfassen:
Zur Ansteuerung eines elektromotorischen Antriebes wird eine Steuerungseinheit vorgeschlagen, die Steuerungsmodule zur Ansteuerung von Halbbrücken-Leistungsendstufen aufweist. Zwei der Steuerungsmodule sind zur wahlweisen Ansteuerung eines Kommutatormotors oder eines bürstenlosen Elektromotors über zwei Halbbrücken-Leistungsendstufen vorkonfiguriert. Das dritte Steuerungsmodul ist nachträglich konfigurierbar zur Ansteuerung einer dritten Halbbrücken-Leistungsendstufe oder zweier einzelner Schaltelemente. Weiterhin wird ein elektromotorischer Antrieb mit der genannten Steuerungseinheit vorgeschlagen
Durch die Erfindung wird die Produktion größerer Stückzahlen von baugleichen Steuerungseinheiten durch Bündelung der Stückzahlen von Steuerungseinheiten für Kommutatormotoren und bürstenlosen Motoren ermöglicht. Dies ermöglicht die Rationalisierung und Automatisierung von Produktions- und Qualitätssicherungsverfahren sowie die Miniaturisierung der Steuerungseinheiten. Dies wirkt sich wiederum positiv auf die Produktkosten, die Produktqualität und die Robustheit der Steuerungseinheiten aus.

Weitere Vorteile und Ausgestaltungen der Erfindung werden nachfolgend anhand von Ausführungsbeispielen sowie anhand der Zeichnung näher erläutert.

Es zeigen schematisch:
- Fig. 1A: eine vereinfachte schematische Darstellung einer H-Vollbrückenschaltung mit separatem Treiber- schaltkreis zur Ansteurung eines Kommutatormotors, gemäß dem Stand der Technik;
- Fig. 1B: eine vereinfachte schematische Darstellung einer Anordnung von drei Halbbrückenschaltungen mit se- paratem Treiberschaltkreis, zur Ansteuerung eines dreiphasigen bürstenlos kommutierten Elektromo- tors, gemäß dem Stand der Technik;
- Fig. 2A: eine vereinfachte schematische Darstellung einer Anordnung von zwei Halbbrücken-Steuerungsbau- steinen mit jeweils integriertem Treiberschalt- kreis, zur Ansteuerung eines Kommutatormotors, ge- mäß dem Stand der Technik;
- Fig. 2B: eine vereinfachte schematische Darstellung eier Anordnung von drei Halbbrücken- Steuerungsbausteinen mit jeweils integriertem Treiberschaltkreis, zur Ansteuerung eines dreipha- sigen bürstenlos kommutierten Elektromotors, gemäß dem Stand der Technik;
- Fig. 3: ein vereinfachtes Blockschaltbild einer erfin- dungsgemäßen elektronischen Steuereinheit;
- Fig. 4: ein weiteres vereinfachtes Blockschaltbild einer erfindungsgemäßen elektronischen Steuereinheit mit erweiterter Funktionalität;
- Fig. 5: eine vereinfachte schematische Darstellung einer Schaltungsanordnung mit erfindungsgemäßer Steue- rungseinheit in Konfiguration zur Ansteurung eines Kommutatormotors und zwei weiteren Signalausgän- gen;
- Fig. 6: eine vereinfachte schematische Darstellung einer Schaltungsanordnung mit erfindungsgemäßer Steue- rungseinheit in Konfiguration zur Ansteuerung ei- nes dreiphasigen bürstenlos kommutierten Elektro- motors; und
- Fig. 7: eine vereinfachte Darstellung eines erfindungsge- mäßen elektromotorischen Antriebs mit Anordnung einer erfindungsgemäßen Steuerungseinheit.

Funktions- und benennungsgleiche Teile sind in den Figuren mit gleichen Bezugszeichen versehen.

Die vereinfachte schematische Darstellung einer H-Vollbrückenschaltung zur Ansteuerung eines Kommutatormotors in Fig. 1A zeigt einen Treiberschaltkreis CIC (A) mit Signaleingängen SE zum Anschluss an einen (nicht dargestellten) übergeordneten Mikrocontroller und Signalausgängen SA gemäß dem Stand der Technik. Die Signalausgänge SA sind mit den Gate-Anschlüssen von vier Feldeffekt-Transistoren (FET) M1, M2, M3 und M4 verbunden. Die vier FETs sind in Vollbrückenschaltung VB angeordnet, wobei jeweils die in Reihe geschalteten FETs M1/M2 und M3/M4 einen Brückenzweig oder eine Halbbrücke oder Halbbrücken-Leistungsendstufe bilden. Die Endpunkte der beiden Halbbrücken sind jeweils verbunden und zur Spannungsversorgung mit ihrem einen Ende an eine Stromanschluss PS (Batterie-Pluspol) und mit dem anderen Ende an einen Masseanschluss GND (Batterie-Minuspol) angeschlossen. In einem Querzweig, zwischen den Verbindungspunkten der jeweiligen FETs der beiden Halbbrücken-Leistungsendstufen, ist als Elektromotor ein Kommutator-Motor MK zwischengeschaltet. Dies ist eine weit verbreitete Art der Ansteuerung eines Kommutator-Motors. Dabei ist der Treiberschaltkreis CIC (A) speziell für diese Art der Ansteuerung vorgesehen und kann nicht für andere Zwecke oder andere Motortypen eingesetzt werden.

So verhält es sich auch mit dem Treiberschaltkreis CIC (B) der in Fig. 1B in einer Schaltungsanordnung zur Ansteuerung eines dreiphasigen bürstenlos kommutierten Elektromotors MBL mit den drei Phasen L1, L2 und L3 dargestellt ist. Auch dieser Treiberschaltkreis CIC (B) weist Signaleingänge SE zum Anschluss an einen (nicht dargestellten) übergeordneten Mikrocontroller und Signalausgängen SA auf, die mit den Gate-Anschlüssen von sechs Feldeffekt-Transistoren (FET) M11 bis M16 verbunden sind. Die FETs M11 bis M16 sind paarweise, M11/M12, M13/M14 und M15/M16 in Reihe zu den drei Halbbrücken-Leistungsendstufen (Halbbrücken, Halbbrückenschaltung) HB1, HB2 bzw. HB3 zusammengeschaltet. Die Endpunkte der drei Halbbrücken sind jeweils verbunden und zur Spannungsversorgung mit ihrem einen Ende an eine Stromanschluss PS (Batterie-Pluspol) und mit dem anderen Ende an einen Masseanschluss GND (Batterie-Minuspol) angeschlossen. An den Verbindungspunkten zwischen den jeweiligen FETs M11/M12, M13/M14 und M15/M16 der drei Halbbrücken-Leistungsendstufen HB1, HB2 und HB3 ist jeweils eine Phase L1, L2 bzw. L3 des bürstenlos kommutierten Elektromotors MBL angeschlossen. Auch dies stellt eine im Stand der Technik übliche Schaltungsanordnung zur Ansteuerung eines bürstenlos kommutierten Elektromotors dar. Dabei ist auch hier der Treiberschaltkreis CIC (B) speziell für diese Art der Ansteuerung vorgesehen und kann nicht für andere Zwecke oder andere Motortypen eingesetzt werden.

In den Fig. 2A und 2B sind wiederum Schaltungsanordnungen zur Ansteuerung eines Kommutator-Motors MK (Fig. 2A) und eines bürstenlos kommutierten Elektromotors MBL (Fig. 2B), wie sie aus dem Stand der Technik bereits bekannt sind dargestellt. Dabei kommt in beiden Fällen ein einheitlicher Steuerungsbaustein SB, jedoch in unterschiedlicher Anzahl, zum Einsatz. Der Steuerungsbaustein SB vereint jeweils eine Halbbrücken-Anordnung von je zwei Feldeffekt-Transistoren (FET) mit dem zugehörigen Treiberschaltkreis CIC zu einer geschlossenen Baueinheit, die über Signaleingänge SE zum Beispiel mit einem übergeordneten, in den Fig. 2A und 2B nicht dargestellten, Mikrocontroller in Verbindung steht. Zur Spannungsversorgung wird jeder einzelne Steuerungsbaustein SB auf einer Seite der jeweiligen Halbbrücken-Leistungsendstufe (Halbbrückenschaltung) der FETs an eine Stromanschluss PS (Batterie-Pluspol) und mit dem anderen Ende der jeweiligen Halbbrückenschaltung an einen Masseanschluss GND (Batterie-Minuspol) angeschlossen. An einen jeweiligen Treiberanschluss TA wird die zu treibende Last an den Steuerungsbaustein angeschlossen.

Zur Ansteuerung eines Kommutatormotors MK, wie in Fig. 2A dargestellt sind zwei Steuerungsbausteine SB erforderlich, wobei die beiden Versorgungsanschlüsse des Motors MK jeweils mit einem Treiberanschluss TA verbunden sind.

Zur Ansteuerung eines bürstenlos kommutierten Elektromotors MBL, wie in Fig. 2B dargestellt, sind drei einzelne Steuerungsbausteine SB erforderlich. Dabei werden die drei Phasen L1, L2 und L3 des Motors MBL jeweils an einen Treiberanschluss TA eines Steuerungsbausteins SB angeschlossen.

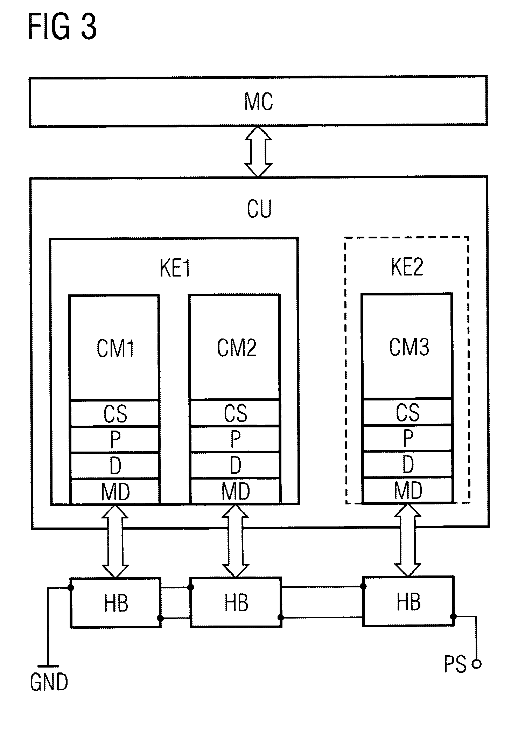

Das vereinfachte Blockschaltbild zur Erläuterung des Aufbaus einer erfindungsgemäßen elektronischen Steuerungseinheit CU in Fig. 3 zeigt eine solche Steuerungseinheit CU, eine damit in Verbindung stehenden Mikrocontroller MC und drei ebenfalls mit der Steuerungseinheit CU in Verbindung stehende und damit anzusteuernde Halbbrücken-Leistungsendstufen (Halbbrückenschaltungen) HB. Jede Halbbrückenschaltung besteht dabei aus zwei (in Fig. 3 nicht dargestellten) Schaltelementen, wie zum Beispiel Feldeffekt-Transistoren gemäß den Darstellungen der Figuren 1A bis 2B. Zum Aufbau der Halbbrückenschaltungen HB können jedoch auch andere Schaltelemente, wie beispielsweise Relaisschalter Verwendung finden.

Die schaltungstechnische Verbindung zwischen den genannten Einheiten ist in Fig. 3 symbolisch jeweils durch einen Doppelpfeil dargestellt. Die drei Halbbrücken-Leistungsendstufen HB sind zur Spannungsversorgung jeweils an einen Stromanschluss PS (Batterie-Pluspol) und an einen Masseanschluss GND (Batterie-Minuspol) angeschlossen. Die Spannungsversorgung der Steuerungseinheit CU und des Mikrocontrollers MC sind in Fig. 3 nicht dargestellt.

Die Steuerungseinheit CU selbst weist drei Steuerungsmodule CM1, CM2 und CM3 auf, über die die Steuerungseinheit CU jeweils mit einer der genannten Halbbrücken-Leistungsendstufen (Halbbrückenschaltungen) HB in Verbindung steht. In dem gezeigten Beispiel sind die Steuerungsmodule CM selbst mit verschiedenen Funktionalitäten zur Ansteuerung der Halbbrückenschaltungen ausgestattet. So weist jedes der Steuerungsmodule CM eine Halbbrückentreiberfunktion MD, eine Diagnosefunktion D, eine Schutzfunktion P und eine Strom-Messfunktion CS auf. Die Treiberfunktion MD dient zur Ansteuerung der einzelnen Schaltelemente, wie zum Beispiel Feldeffekt-Transistoren, der Halbbrückenschaltungen.

Das erste Steuerungsmodul CM1 und das zweite Steuerungsmodul CM2 werden auf einer gemeinsamen Konfigurationsebenen KE1 konfiguriert. Das dritte Steuerungsmodul CM3 wird auf einer separat angeordneten zweiten Konfigurationsebenen KE2 konfiguriert.

Die jeweilige Konfigurationsebene KE1/KE2 bildet die Plattform zur Konfiguration der einzelnen Steuerungsmodule in Kombination oder auch einzeln.

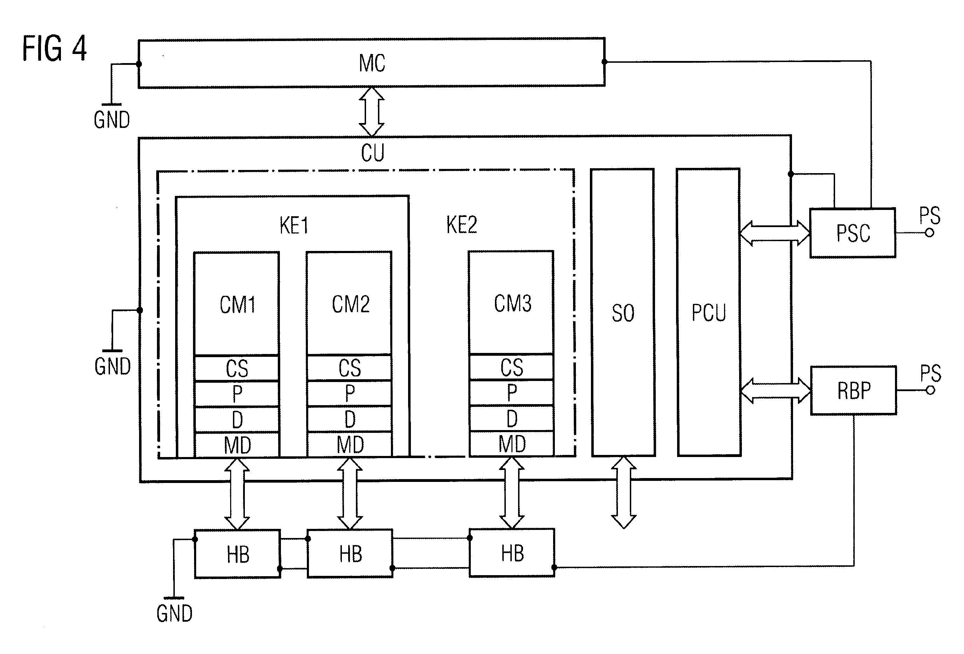

Das vereinfachte Blockschaltbild in Fig. 4 zeigt den Aufbau einer weiteren erfindungsgemäßen elektronischen Steuerungseinheit CU und den damit in Verbindung stehenden Mikrocontroller MC sowie drei ebenfalls mit der Steuereinheit CU in Verbindung stehende und damit anzusteuernde Halbbrückenschaltungen HB.

Auch in dieser Darstellung in Fig. 4 ist die schaltungstechnische Verbindung zwischen den genannten Einheiten symbolisch jeweils durch einen Doppelpfeil dargestellt. Auch diese Steuerungseinheit CU weist drei Steuerungsmodule CM1, CM2 und CM3 auf, über die die Steuerungseinheit CU jeweils mit einer der genannten Halbbrücken-Leistungsendstufen (Halbbrückenschaltungen) HB in Verbindung steht. Die Steuerungsmodule CM sind, analog zum Beispiel in Figur 3, wiederum mit verschiedenen Funktionalitäten zur Ansteuerung der Halbbrückenschaltungen ausgestattet.

Zusätzlich zu den Steuerungsmodulen CM ist die Steuerungseinheit CU mit zwei weiteren Funktionsmodulen Ausgestattet. Das erste ist ein zusätzliches Signalmodul SO. Dieses Signalmodul SO dient zur Bereitstellung einer Anzahl weiterer Signalausgänge und/oder Signaleingänge, die zur Ansteuerung zusätzlicher Funktionen bzw. zur Entgegennahme und ggf. Aufbereitung externer elektrischer Signale herangezogen werden können.

Das zweite zusätzliche Funktionsmodul ist das Versorungsspannungs-Steuerungsmodul PCU. Es steht mit einer externen Spannungs-Stabilisierungseinheit PSC sowie mit dem Batterie-Verpolschutz RBP in Verbindung und steuert die Funktionen dieser externen Einheiten.

Die drei Halbbrückenschaltungen HB sind einerseits zur Absicherung gegen eine Verpolung der Batterie jeweils über den Batterie-Verpolschutz RBP an den Stromanschluss PS (Batterie-Pluspol) und andererseits an einen Masseanschluss GND (Batterie-Minuspol) angeschlossen. Mit Hilfe der Spannungs-Stabilisierungseinheit PSC wird die Versorgungsspannung für den Mikrocontroller MC und die Steuerungseinheit CU selbst auf einen vorbestimmten Wert geregelt zur Verfügung gestellt. Das erste Steuerungsmodul CM1 und das zweite Steuerungsmodul CM2 liegen auf einer gemeinsamen Konfigurationsebenen KE1. Die in Fig. 4 mit durchgehender Linie abgegrenzt dargestellte Konfigurationsebene KE1 symbolisiert widerum eine feste Vorkonfiguration der Steuerungsmodule CM1 und CM2 zur Ansteuerung zweier externer Halbbrücken. Das dritte Steuerungsmodul CM3 liegt auf einer separat angeordneten zweiten Konfigurationsebenen KE2, die die Konfigurationsebene KE1 übergreift. Die Konfigurationsebene KE2 ist im Nachhinein vom Anwender konfigurierbar, was wiederum durch die gestrichelt dargestellte Abgrenzung und die Schraffur der Fläche symbolisiert wird. Auf dieser Konfigurationsebene KE2 kann sowohl das Sterungsmodul CM3 als auch die vorkonfigurierten Steuerungsmodule CM1 und CM2 übergeornet mit dem Steuerungsmodul CM3 zu einer Steuerungseinheit verknüpft werden.

So kann auch hier das Steuerungsmodul CM3 zur Ansteuerung einer dritten externen Halbbrückenschaltung HB, wie in Fig. 4 dargestellt oder zur Ansteuerung von einzelnen externen Leistungsschaltern (nicht dargestellt) oder auch zur Bereitstellung einfacher elektrischer Ausgangs-Signale konfiguriert werden.

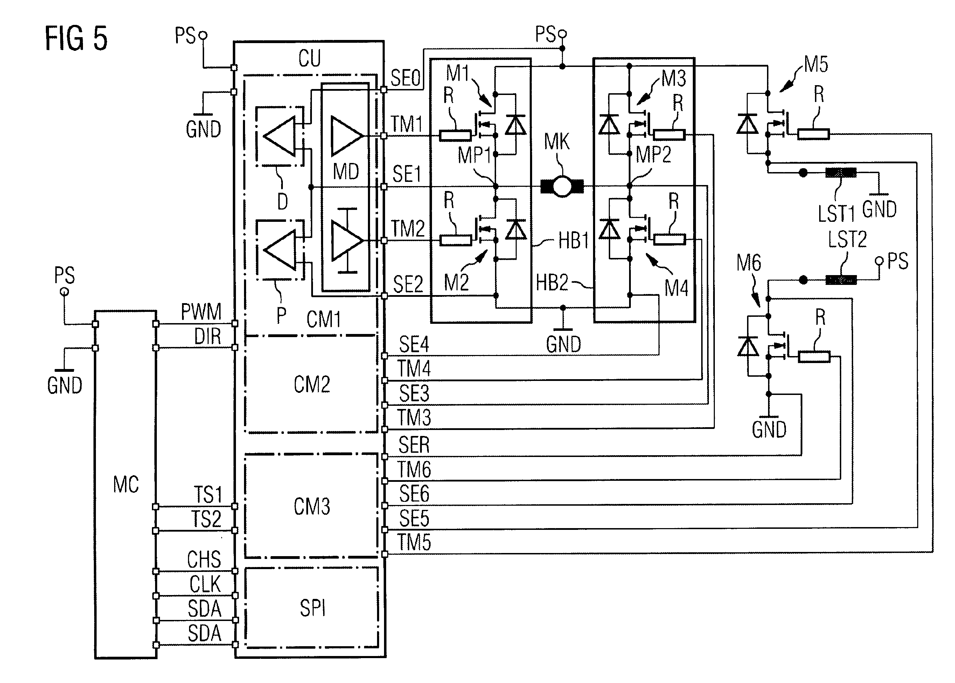

Fig. 5 zeigt eine vereinfachte schematische Darstellung einer Schaltungsanordnung mit erfindungsgemäßer Steuerungseinheit in Konfiguration zur Ansteurung eines Kommutatormotors MK und zwei weiteren Treiber-Ausgängen zur Ansteuerung zweier zusätzlicher Lasten LST1/LST2 über zwei Leistungs-Schaltelemente M5 und M6. Die Steuerungseinheit CU weist drei Steuerungsmodule CM1, CM2 und CM3 zur Ansteuerung von sechs externen Schaltelementen M1, bis M6 auf, die in Fig. 5 als Feldeffekt-Transistoren mit entsprechenden Schaltsymbolen dargestellt sind. Beispielhaft ist das Steuerungsmodul CM1 mit Funktionseinheiten zur Ausführung der Halbbrückentreiberfunktion MD sowie für die Schutzfunktion P und die Diagnosefunktion D dargestellt. Diese Funktionen stehen, auch wenn sie in Fig. 5 nicht dargestellt sind, auch in den weiteren Steuerungsmodulen zur Verfügung.

Das erste Steuerungsmodul CM1 und das zweite Steuerungsmodul CM2 sind konfiguriert zur koordinierten Ansteuerung eines Elektromotors über zwei Halbbrückenschaltungen. Das dritte Steuerungsmodul CM3 ist konfiguriert zur getrennten Ansteuerung von zwei weiteren einzelnen Leistungs-Schaltelemeten M5 und M6, über die eine erste Last LST1 bzw. eine zweite Last LST2 betreibbar sind.

Weiterhin weist die Steuerungseinheit CU ein Schnittstellen-Modul SPI auf, das als serielle Schnittstelle ausgelegt ist und zur Daten-Kommunikation zwischen dem Mikrocontroller MC und der Steuerungseinheit CU vorgesehen ist.

Über einen Chip-Select-Anschluss CHS, einen Taktgeber-Anschluss CLK und zwei serielle Signalanschlüsse SDA steht die Steuerungseinheit CU über die serielle Schnittstelle in Daten-Austausch-Verbindung mit dem übergeordneten Mikrocontroller MC. Weiterhin kann über diese Schnittstelle SPI auch die Konfiguration der Steuerungsmodule durch überspielen eines Programmcodes vorgenommen werden.

Weitere elektrische Verbindungen zwischen Mikrocontroller MC und Steuerungseinheit CU bestehen mit dem Pulsweitensignal-Anschluss PWM, dem Drehrichtungssignal-Anschluss DIR und den beiden Treibersignal-Anschlüssen TS1 und TS2. Über den Pulsweitensignal-Anschluss wird der Steuerungseinheit CU eine Pulsweitenmodulation vom Mikrocontroller MC vorgegebene, welche die Leistungsvorgabe für den Elektromotor darstellt. Über den Drehrichtungssignal-Anschluss DIR wird der Steuerungseinheit CU eine Motor-Drehrichtung vom Mikrocontroller MC vorgegeben, die in der Steuerungseinheit CU in der Drehrichtungsvorgabe entsprechende Steuersignale für die Schaltelemente M1/M2/M3/M4 der Halbbrücken-Leistungsendstufen HB1/HB2 umgesetzt wird. Über die beiden Treibersignal-Anschlüsse TS1/TS2 erfolgt durch den Mikrocontroller MC eine Schaltvorgabe für die über die Steuerungseinheit CU und die Schaltelemente M5/M6 zu schaltenden Lasten LST1/LST2. Sowohl der Mikrocontroller MC als auch die Steuerungseinheit CU sind über den Stromanschluss PS und den Masseanschluss GND an eine Versorgungsspannung angeschlossen.

Das erste und das zweite Schaltelement M1/M2 sowie das dritte und das vierte Schaltelement M3/M4 sind jeweils zu einer ersten Halbbrückenschaltung HB1 bzw. einer zweiten Halbbrückenschaltung HB2 zusammengeschaltet. Der Brücken-Mittelpunkt MP1 der ersten Halbbrückenschaltung HB1 bildet den ersten Leistungsanschluss und der Brücken-Mittelpunkt MP2 der zweiten Halbbrückenschaltung HB2 bildet den zweiten Leistungsanschluss für den Kommutatormotor MK. Die beiden Halbbrückenschaltungen sind mit je einem Ende zusammen am Masseanschluss GND und mit dem jeweils anderen Ende zusammen auf den Stromanschluss einer Stromversorgung angeschlossen.

Die Schaltelemente M1/M2 der ersten Halbbrückenschaltung (Halbbrücken-Leistungsendstufe) HB1 sind jeweils über einen Vorwiderstand R an die Treiberanschlüsse TM1 und TM2 der Halbbrückentreiberfunktion MD des ersten Steuerungsmoduls CM1 angeschlossen. In gleicher Weise sind die Schaltelemente M3/M4 der zweiten Halbbrückenschaltung HB2 jeweils über einen Vorwiderstand R an die Treiberanschlüsse TM3 und TM4 des zweiten Steuerungsmoduls CM2 angeschlossen. Weiterhin besteht eine elektrische Verbindung zwischen einem Punkt in der gemeinsamen Versorgungsleitung der Halbbrückenschaltungen zum Stromanschluss und einem Signaleingang SE0 der Steuerungseinheit CU. Weitere elektrische Verbindungen zwischen der Steuerungseinheit CU und den Halbbrückenschaltungen HB1 und HB2 bestehen zwischen den Brückenmittelpunkten MP1 und MP2 und den Signal-Eingängen SE1 bzw. SE3 sowie zwischen der jeweiligen Masse-Anschlussleitung der Halbbrückenschaltungen HB1 und HB2 und den Signal-Eingängen SE2 bzw. SE4. Die auf diese Weise in die Steuerungseinheit eingespeisten Signale werden dort zur Ausführung der Diagnosefunktion D (Anschluss SEO) und der Schutzfunktion P herangezogen und werden den entsprechenden Funktionseinheiten D/P der Steuerungsmodule CM1 und CM2 zugeführt.

An die Treiber-Anschlüsse TM5 und TM6 der Steuerungseinheit CU sind die Leistungs-Schaltelemente M5 bzw. M6 über Vorwiderstände R an das dritte Steuerungsmodul CM3 angeschlossen.

Das Schaltelement M5 ist als so genanntes High-Side-Schaltelement ausgelegt und zwischen den Stromanschluss PS und den Masseanschluss GND geschaltet. Die zu schaltende Last LST1 ist dabei zwischen dem Masseanschluss und dem Schaltelement angeordnet. Über den Signalanschluss SE5 steht das Steuerungsmodul CM3 in elektrischer Verbindung mit einem Messpunkt in der Stromleitung zwischen Last LST1 und Schaltelement M5. Das auf diese Weise in die Steuerungseinheit CU eingespeisten Signal wird dort zur Ausführung der Schutzfunktion P herangezogen.

Das Schaltelement M6 ist als so genanntes LOW-Side-Schaltelement ausgelegt und zwischen den Stromanschluss PS und den Masseanschluss GND geschaltet. Die zu schaltende Last LST2 ist dabei zwischen dem Stromanschluss PS und dem Schaltelement M6 angeordnet. Über den Signalanschluss SE6 steht das Steuerungsmodul CM3 in elektrischer Verbindung mit einem Messpunkt in der Stromleitung zwischen Last LST1 und Schaltelement M6. Das auf diese Weise in die Steuerungseinheit CU eingespeiste Signal wird dort ebenfalls zur Ausführung der Schutzfunktion P herangezogen.

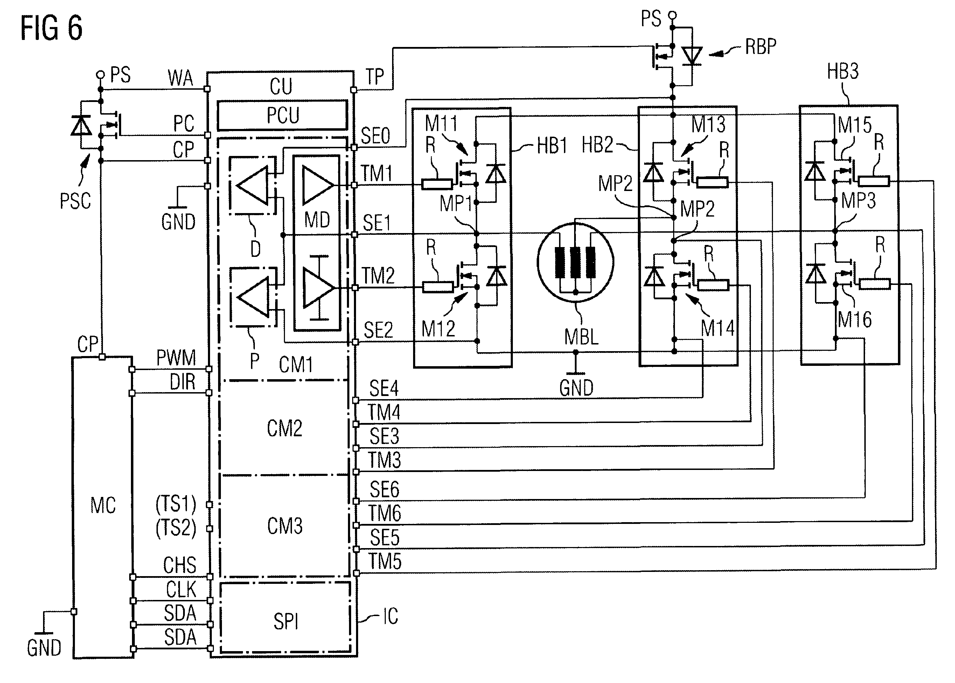

Fig. 6 zeigt eine vereinfachte schematische Darstellung einer weiteren Schaltungsanordnung mit erfindungsgemäßer Steuerungseinheit in Konfiguration zur Ansteurung eines bürstenlos kommutierten Elektromotors MBL. Die Steuerungseinheit CU weist drei Steuerungsmodule CM1, CM2 und CM3 zur Ansteuerung von sechs externen Schaltelementen M1, bis M6 auf, die in Fig. 6 als Feldeffekt-Transistoren mit entsprechenden Schaltsymbolen dargestellt sind. Beispielhaft ist das Steuerungsmodul CM1 mit Funktionseinheiten zur Ausführung der Halbbrückentreiberfunktion MD sowie für die Schutzfunktion P und die Diagnosefunktion D dargestellt. Diese Funktionen stehen, auch wenn sie in Fig. 6 nicht dargestellt sind, auch in den weiteren Steuerungsmodulen CM2, CM3 zur Verfügung. Das erste Steuerungsmodul CM1, das zweite Steuerungsmodul CM2 und das dritte Steuerungsmodul CM3 sind gemeinsam konfiguriert zur koordinierten Ansteuerung des dargestellten bürstenlosen Elektromotors MBL über die den drei Motorphasen zugeordneten drei Halbbrückenschaltungen (Halbbrücken-Leistungsendstufen) HB1, HB2 und HB3.

Weiterhin weist die Steuerungseinheit CU auch in diesem Ausführungsbeispiel ein Schnittstellen-Modul SPI auf, das als serielle Schnittstelle ausgelegt ist und zur Daten-Kommunikation zwischen dem Mikrocontroller MC und der Steuerungseinheit CU vorgesehen ist. Über einen Chip-Select-Anschluss CHS, einen Taktgeber-Anschluss CLK und zwei serielle Signalanschlüsse SDA steht die Steuerungseinheit CU über die serielle Schnittstelle in Daten-Austausch-Verbindung mit dem übergeordneten Mikrocontroller MC. Weiterhin kann über diese Schnittstelle SPI auch die Konfiguration der Steuerungsmodule durch überspielen eines Programmcodes vorgenommen werden.

Weitere elektrische Verbindungen zwischen Mikrocontroller MC und Steuerungseinheit CU bestehen mit dem Pulsweitensignal-Anschluss PWM, dem Drehrichtungssignal-Anschluss DIR. Die beiden Treibersignal-Anschlüssen TS1 und TS2 der Steuerungseinheit CU sind hier nicht belegt. Über den Pulsweitensignal-Anschluss wird der Steuerungseinheit CU eine Pulsweitenmodulation vom Mikrocontroller MC vorgegebene, welche die Leistungsvorgabe für den Elektromotor darstellt. Über den Drehrichtungssignal-Anschluss DIR wird der Steuerungseinheit CU eine Motor-Drehrichtung vom Mikrocontroller MC vorgegeben, die in der Steuerungseinheit CU in der Drehrichtungsvorgabe entsprechende Steuersignale für die Schaltelemente M1/M2/M3/M4/M5/M6 der Halbbrückenschaltungen HB1/HB2/HB3 umgesetzt wird.

Das erste und das zweite Schaltelement M11/M12, das dritte und das vierte Schaltelement M13/M14 sowie das fünfte und das sechste Schaltelement M15/M16 sind jeweils zu einer ersten Halbbrückenschaltung HB1 einer zweiten Halbbrückenschaltung HB2 bzw. einer dritten Halbbrückenschaltung HB3 zusammengeschaltet. Die Brücken-Mittelpunkte MP1, MP2 und MP3 der ersten, zweiten und dritten Halbbrückenschaltung HB1, HB2 und HB3 bilden den ersten, zweiten und dritten Leistungsanschluss für die drei Phasen des bürstenlosen Elektromotors MBL.

Die drei Halbbrückenschaltungen HB1, HB2 u. HB3 sind mit je einem Ende zusammen am Masseanschluss GND und mit dem jeweils anderen Ende zusammen auf den Stromanschluss eines Batterie-Verpolschutzes RBP, in Form eines Leistungstransistors, und über diesen an der Stromversorgung PS angeschlossen.

Weiterhin weist die in Fig. 6 dargestellte Steuerungseinheit CU ein Versorgungsspannungs-Steuerungsmodul PCU auf, welches über den Treiber-Anschluss TP mit dem Batterie-Verpolschutz RBP für die Stromversorgung der Halbbrückenschaltungen HB1, HB2 u. HB3 verbunden ist. Dieser Batterie-Verpolschutz RBP ist in der gemeinsamen Stromzuleitung der Halbbrückenschaltungen HB1, HB2 u. HB3 zwischen den Halbbrückenzweigen und dem Stromanschluss PS angeordnet. Wird beispielsweise durch das Versorgungsspannungs-Steuerungsmodul PCU eine Verpolung der Batterie festgestellt, so wird über den Treiber-Anschluss TP der Batterie-Verpolschutz RBP, für die Halbbrücken-Leistungsendstufen HB1, HB2 u. HB3, aktiviert.

Die Stromversorgung des Mikrocontrollers MC und der Steuerungseinheit CU erfolgt mit Hilfe einer Spannungs-Stabilisierungseinheit PSC über die Versorgungsanschlüsse CP einerseits und die Masseanschlüsse GND andererseits. Über den Treiber-Anschluss PC steht die Spannungs-Stabilisierungseinheit PSC mit der Versorgungsspannungs-Steuerungseinheit PCU in Steuerungs-Verbindung. Über den zusätzlichen Aktivierungs-Anschluss WA steht die Steuerungseinheit CU direkt mit der Stromanschluss PS in Verbindung. Bei Inbetriebnahme der Steuerungseinheit CU wird zunächst Versorgungsspannung an den Aktivierungs-Anschluss WA angelegt und das Versorgungsspannungs-Steuerungsmodul PCU in Betrieb genommen, mit dessen Hilfe in der Folge eine über die Spannungs-Stabilisierungseinheit PSC geregelte Versorgungsspannung zur Verfügung gestellt wird.

Die Schaltelemente M1/M2 der ersten Halbbrückenschaltung HB1 sind jeweils über einen Vorwiderstand R an die Treiberanschlüsse TM1 und TM2 der Halbbrückentreiberfunktion MD des ersten Steuerungsmoduls CM1 angeschlossen. In gleicher Weise sind die Schaltelemente M3/M4 der zweiten Halbbrückenschaltung HB2 und die Schaltelemente M5/M6 der dritten Halbbrückenschaltung HB3 jeweils über einen Vorwiderstand R an die Treiberanschlüsse TM3 und TM4 des zweiten Steuerungsmoduls CM2 bzw. TM5 und TM6 des dritten Steuerungsmoduls CM3 angeschlossen. Weiterhin besteht eine elektrische Verbindung zwischen einem Punkt in der gemeinsamen Versorgungsleitung der Halbbrückenschaltungen zum Stromanschluss und einem Signaleingang SE0 der Steuerungseinheit CU. Weitere elektrische Verbindungen zwischen der Steuerungseinheit CU und den Halbbrückenschaltungen HB1 und HB2 bestehen zwischen den Brückenmittelpunkten MP1, MP2 und MP3 und den Signal-Eingängen SE1, SE3 bzw. SE5 sowie zwischen der jeweiligen Masse-Anschlussleitung der Halbbrückenschaltungen HB1, HB2 und HB3 und den Signal-Eingängen SE2, SE4 bzw. SE6. Die auf diese Weise in die Steuerungseinheit eingespeisten Signale werden dort zur Ausführung der Diagnosefunktion D (Anschluss SEO) und der Schutzfunktion P herangezogen und werden den entsprechenden Funktionseinheiten D/P der Steuerungsmodule CM1, CM2 und CM3 zugeführt. Wird beispielsweise mit Hilfe der eingespeisten Signale eine Fehlfunktion des Elektromotors MBL diagnostiziert, so kann ein schneller, ggf. korrigierender Eingriff direkt, durch in der Steuerungseinheit CU hinterlegte Steuerungsroutinen und Ausgabe entsprechender Treiberwerte an die Schaltelemente M11, ...,M16, erfolgen.

In den Fig. 3 bis 6 ist die Steuerungseinheit immer als Baueinheit, mit geschlossener Umrahmung dargestellt. Diese Baueinheit kann in einfacher Ausführung aus einem Schaltungsträger mit einzelnen darauf montierten und miteinander verschalteten Bauelementen bestehen. Dabei ist es vorteilhaft, wenn die Funktionseinheiten, wie zum Beispiel die Steuerungsmodule, zumindest teilweise aus integrierten Schaltkreisen bestehen.

In weiterer Integrationsstufe kann die Konfigurationsebene KE1 für die zwei vorkonfigurierten Steuermodule CM1, CM2 als anwendungsspezifischer integrierter Schaltkreis (ASIC) und die Konfigurationsebene KE2 für das frei konfigurierbare Steuermodul CM3 als programmgesteuerter Mikrocontroller ausgeführt sein. Das ermöglicht ggf. den Einsatz von Standardbauelementen und trägt somit zur Reduzierung der Herstellkosten bei.

Besonders Vorteilhaft zur Reduzierung der Baugröße und zur Vereinfachung der Montagetätigkeiten ist es, wenn die Steuerungseinheit mit allen erforderlichen Schaltkreisen und Funktionen in einem integrierten Baustein zusammengefasst sind. Dies ergibt einen sehr kompakten, robusten Aufbau der Steuerungseinheit die wiederum eine sehr Motornahe Anordnung der Steuerungseinheit, ggf. im gleichen Gehäuse mit den Elektromotor ermöglicht.

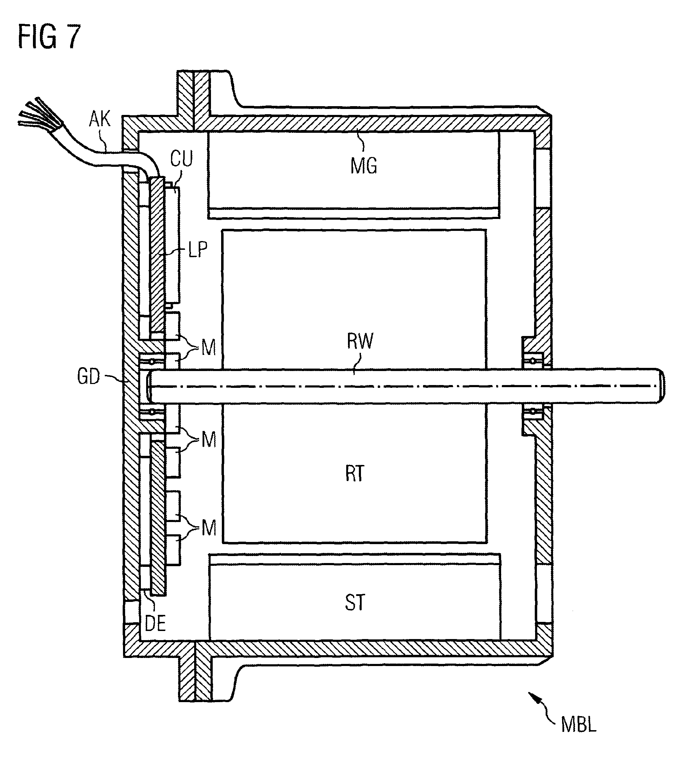

In Fig. 7 ist eine erfindungsgemäße elektromotorische Antriebseinheit mit Anordnung einer erfindungsgemäßen Steuerungseinheit in einer Entwurfsskizze vereinfacht dargestellt. Dabei handelt es sich um einen bürstenlosen Elektromotor MBL mit einem gewickelten Stator ST und einem permanentmagneterregten Rotor RT auf einer Rotorwelle RW. Der aus diesen Komponenten bestehende Motor ist untergebracht in einem topfförmigen Motorgehäuse MG mit einem rückseitigen Gehäusedeckel GD. Auf der Gehäuseinnenseite des rückseitigen Gehäusedeckels GD ist über Dämpfungselemente DE ein Schaltungsträger LP in Form einer Leiterplatte befesetigt. Dieser Schaltungsträger LP trägt eine erfindungsgemäße Steuerungseinheit CU in Form eines integrierten Schaltkreises und sechs Leistungs-Schaltelemente M, die auf dem Schaltungsträger zu drei Halbbrückenschaltungen und mit der Steuerungseinheit CU verschaltet sind. Die Anschlussleitungen zur Leistungsversorgung und zur Verbindung mit einem externen Mikrocontroller sind mit Hilfe eines Anschlusskabels AK vom Schaltungsträger LP weg aus dem Motorgehäuse MG heraus geführt.

Die vorliegende Erfindung lässt sich wie folgt zusammenfassen: Zur Ansteuerung eines elektromotorischen Antriebes MK/MBL wird eine Steuerungseinheit CU vorgeschlagen, die Steuerungsmodule CM1/CM2/CM3 zur Ansteuerung von Halbbrücken-Leistungsendstufen HB1/HB2/HB3 aufweist. Zwei der Steuerungsmodule CM1/CM2 sind zur wahlweisen Ansteuerung eines Kommutatormotors MK oder eines bürstenlosen Elektromotors MBL über zwei Halbbrücken-Leistungsendstufen HB1/HB2 vorkonfiguriert. Das dritte Steuerungsmodul CM3 ist nachträglich konfigurierbar zur Ansteuerung einer dritten Halbbrücken-Leistungsendstufe HB3 oder zweier einzelner Schaltelemente M. Weiterhin wird ein elektromotorischer Antrieb MK/MBL mit der genannten Steuerungseinheit CU vorgeschlagen.

Durch die Erfindung wird die Produktion größerer Stückzahlen von baugleichen Steuerungseinheiten durch Bündelung der Stückzahlen von Steuerungseinheiten für Kommutatormotoren und bürstenlosen Motoren ermöglicht. Dies ermöglicht die Rationalisierung und Automatisierung von Produktions- und Qualitätssicherungsverfahren, was sich wiederum positiv auf die Produktkosten und die Produktqualität auswirkt. Weiterhin ist durch die Erfindung ein sehr kompakter und robuster Aufbau der Steuerungseinheit und somit die Anordnung direkt an oder in der elektromotorischen Antriebseinheit ermöglicht.

## Patentansprüche

1. Elektronische Steuerungseinheit (CU) zur Ansteuerung mindestens dreier externer Halbbrücken-Leistungsendstufen (HB1; HB2; HB3), die für jede der Halbbrücken-Leistungsendstufen (HB1; HB2; HB3) ein Steuermodul (CM1; CM2; CM3) aufweist, **dadurch gekennzeichnet, dass**
ein erstes (CM1) und ein zweites (CM2) Steuermodul zusammen zur Ansteuerung eines Elektromotors (MK/MBL) über zwei Halbbrücken-Leistungsendstufen (HB1; HB2) auf einer ersten gemeinsamen Konfigurationsebene (KE1) vorkonfiguriert sind; und mindestens ein drittes Steuermodul (CM3) auf einer zweiten Konfigurationsebene (KE2) dergestalt frei konfigurierbar ist, dass die Ausgänge (TM5;TM6) des Steuermoduls (CM3) wahlweise zur Steuerung einer einzelnen Phase (L1/L2/L3) eines Elektromotors (MBL) oder als zwei einfache Signal- oder Treiberausgänge (TM5; TM6) zur Ansteuerung zweier zusätzlicher Lasten (LST1, LST2) nutzbar sind.

2. Steuerungseinheit (CU) nach Anspruch 1, **dadurch gekennzeichnet, dass** auf der zweiten Konfigurationsebene (KE2) zusätzlich das erste (CM1) und das zweite (CM2) Steuermodul wahlweise zur Ansteuerung eines Kommutatormotors (MK) oder zur Ansteuerung zweier Phasen (L1; L2) eines dreiphasigen bürstenlos kommutierten Elektromotors (MBL) konfigurierbar sind.

3. Steuerungseinheit nach Anspruch 1 oder 2, **gekennzeichnet durch** ein zusätzliches Steuermodul (PCU) zur Steuerung einer externen elektrischen Spannungsversorgung (PS).

4. Steuerungseinheit nach einem der Ansprüche 1 bis 3, **gekennzeichnet durch** ein zusätzliches Steuermodul (SO)mit zumindest einem weiteren Signalausgang.

5. Steuerungseinheit nach einem der vorherigen Ansprüche, **gekennzeichnet durch** eine Schnittstelle (SPI) zur Verbindung mit einer externen übergeordneten Recheneinheit, insbesondere einem Mikrocontroller(MC).

6. Steuerungseinheit nach einem der vorherigen Ansprüche, **dadurch gekennzeichnet, dass** zumindest ein Steuermodul (CM) für eine Halbbrücken-Leistungsendstufe (HB) Funktionselemente zur Transistorsteuerung (MD) und/oder zur Strommessung (CS) und/oder zur Überlasterkennung (D) und/oder zum Überlastungsschutz (P) aufweist.

7. Steuerungseinheit nach einem der vorherigen Ansprüche, **dadurch gekennzeichnet, dass** diese zumindest teilweise aus integrierten Schaltkreisen besteht.

8. Steuerungseinheit nach Anspruch 7, **dadurch gekennzeichnet, dass** die zwei vorkonfigurierten Steuermodule (CM1; CM2) als anwendungsspezifischer integrierter Schaltkreis (ASIC) und das frei konfigurierbare Steuermodul (CM3) als durch Software gesteuerter Mikrocontroller ausgeführt sind.

9. Steuerungseinheit nach Anspruch 7 oder 8, **dadurch gekennzeichnet, dass** alle Steuerungsmodule (CM1; CM2; CM3; SO; PCU; SPI) der Steuerungseinheit (CU) in einem integrierten Baustein (IC) zusammengefasst sind.

10. Elektromotorischer Antrieb mit Spulen und Permanentmagneten in einem Motorgehäuse mit einer Anordnung von Halbbrücken-Leistungsendstufen zur Spannungsversorgung der Spulen und mit einer elektronischen Steuerungseinheit nach einem der vorherigen Ansprüche zur Ansteuerung der Halbbrücken-Leistungsendstufen, wobei die Steuereinheit im oder am Motorgehäuse angeordnet ist.

## Claims

1. Electronic control unit (CU) for controlling at least three external half-bridge power output stages (HB1; HB2; HB3) and having a control module (CM1; CM2; CM3) for each of said half-bridge power output stages (HB1; HB2; HB3),
**characterised in that**
a first (CM1) and a second (CM2) control module are jointly pre-configured for controlling an electric motor (MK/MBL) via two half-bridge power output stages (HB1; HB2) on a first common configuration level (KE1); and at least one third control module (CM3) on a second configuration level (KE2) is freely configurable such that the outputs (TM5; TM6) of the control module (CM3) can be optionally used for controlling an individual phase (L1/L2/L3) of an electric motor (MBL) or as two simple signal or driver outputs (TM5; TM6) for controlling two additional loads (LST1, LST2).

2. Control unit (CU) according to claim 1,
**characterised in that**, on the second configuration level (KE2), the first (CM1) and the second (CM2) control module can also be optionally configured for controlling a commutator motor (MK) or for controlling two phases (L1; L2) of a three-phase brushlessly commutated electric motor (MBL).

3. Control unit according to claim 1 or 2,
**characterised by** an additional control module (PCU) for controlling an external electrical voltage supply (PS).

4. Control unit according to one of claims 1 to 3,
**characterised by** an additional control module (SO) with at least one other signal output.

5. Control unit according to one of the preceding claims,
**characterised by** an interface (SPI) for connection to an external, higher-order arithmetic logic unit, in particular a microcontroller (MC).

6. Control unit according to one of the preceding claims,
**characterised in that** at least one control module (CM) for a half-bridge power output stage (HB) has functional elements for transistor control (MD) and/or current sensing (CS) and/or overload detection (D) and/or overload protection (P).

7. Control unit according to one of the preceding claims,
**characterised in that** it consists, at least in part, of integrated circuits.

8. Control unit according to claim 7,
**characterised in that** the two pre-configured control modules (CM1; CM2) can be implemented as an application-specific integrated circuit (ASIC) and the freely configurable control module (CM3) as a software-controlled microcontroller.

9. Control unit according to claim 7 or 8,
**characterised in that** all the control modules (CM1; CM2; CM3; S0; PCU; SPI) of the control unit (CU) are combined in an integrated device (IC).

10. Electric motor operated drive with coils and permanent magnets in a motor housing with an arrangement of half-bridge power output stages for supplying voltage to the coils and with an electronic control unit according to one of the preceding claims for controlling the half-bridge power output stages, the control unit being disposed in or on the motor housing.

## Revendications

1. Unité de commande électronique (CU) pour commander au moins trois étages de sortie de puissance à demi-ponts externes (HB1 ; HB2 ; HB3), qui présente, pour chaque étage de sortie de puissance à demi-pont (HB1 ; HB2 ; HB3), un module de commande (CM1 ; CM2 ; CM3), **caractérisée en ce que :**
un premier (CM1) et un deuxième (CM2) module de commande sont préconfigurés conjointement pour la commande d'un moteur électrique (MK/MBL) via deux étages de sortie de puissance à demi-ponts (HB1 ; HB2) à un premier niveau de configuration commun (KE1) ; et au moins un troisième module de commande (CM3) peut être configuré librement à un second niveau de configuration (KE2) de sorte que les sorties (TM5 ; TM6) du module de commande (CM3) puissent être utilisées, au choix, pour commander une phase unique (L1/L2/L3) d'un moteur électrique (MBL) ou sous la forme de deux sorties de signal ou de driver simples (TM5 ; TM6) pour commander deux charges supplémentaires (LST1 ; LST2).

2. Unité de commande (CU) selon la revendication 1, **caractérisée en ce qu'**au second niveau de configuration (KE2), le premier (CM1) et le deuxième (CM2) module de commande peuvent en outre être configurés au choix pour commander un moteur de commutation (MK) ou pour commander deux phases (L1 ; L2) d'un moteur électrique triphasé sans balais (MBL) à commutation électronique.

3. Unité de commande selon la revendication 1 ou 2, **caractérisée par** un module de commande (PCU) supplémentaire pour commander une alimentation en tension électrique externe (PS).

4. Unité de commande selon l'une quelconque des revendications 1 à 3, **caractérisée par** un module de commande (SO) supplémentaire ayant au moins une autre sortie de signal.

5. Unité de commande selon l'une quelconque des revendications précédentes, **caractérisée par** une interface (SPI) pour la connexion à une unité de calcul supérieure externe, en particulier à un microcontrôleur (MC).

6. Unité de commande selon l'une quelconque des revendications précédentes, **caractérisée en ce qu'**au moins un module de commande (CM) pour un étage de sortie de puissance à demi-pont (HB) présente des éléments fonctionnels pour la commande de transistor (MD) et/ou la mesure de courant (CS) et/ou la détection de surcharge (D) et/ou la protection contre une surcharge (P).

7. Unité de commande selon l'une quelconque des revendications précédentes, **caractérisée en ce que** celle-ci est constituée au moins partiellement de circuits intégrés.

8. Unité de commande selon la revendication 7, **caractérisée en ce que** les modules de commande préconfigurés (CM1 ; CM2) se présentent sous la forme d'un circuit intégré à application spécifique (ASIC) et **en ce que** le module de commande (CM3) librement configurable se présente sous la forme d'un microcontrôleur commandé par un logiciel.

9. Unité de commande selon la revendication 7 ou 8, **caractérisée en ce que** tous les modules de commande (CM1 ; CM2 ; CM3 ; SO ; PCU ; SPI) de l'unité de commande (CU) sont regroupés dans un bloc intégré (IC).

10. Entraînement électromoteur, comprenant desbobines et des aimants permanents dans un boîtier de moteur avec un agencement d'étages de sortie de puissance à demi-ponts pour l'alimentation en tension des bobines et avec une unité de commande électronique selon l'une quelconque des revendications précédentes pour la commande des étages de sortie de puissance à demi-ponts, l'unité de commande étant aménagée dans ou sur le boîtier de moteur.
